# EUROPÄISCHE PATENTANMELDUNG

(11) **EP 4 447 314 A1**
(43) Veröffentlichungstag der Anmeldung: **16.10.2024**
(21) Anmeldenummer: 23168088.5
(22) Anmeldetag: 14.04.2023
(51) Int. Cl.: H02S 20/26, H02S 40/36, H02S 40/38

(54) **TERRASSENÜBERDACHUNG MIT PHOTOVOLTAIKMODULEN UND INTEGRIERTEN ANSCHLUSSBEREICHEN**

(71) Anmelder: weinor GmbH & Co. KG, 50829 Köln (DE)
(72) Erfinder: Stawski, Karl-Heinz, 50769 Köln (DE); Klatt, Alexander, 51491 Overath (DE)
(74) Vertreter: Patentanwaltskanzlei Methling

(57) **Zusammenfassung**

Die Erfindung betrifft eine Terrassenüberdachung (1) mit einem aus mehreren Trägern (2, 3, 4, 5) gebildeten Rahmen, der eines oder mehrere Dachelemente aufnimmt, wobei die Terrassenüberdachung (1) zumindest ein Photovoltaikmodul (11, 12, 13, 14) aufweist, wobei das/die Photovoltaikmodul/e (11, 12, 13, 14) von an Sparren (7) angeordneten Glashalteleisten gehalten wird/werden, wobei die Glashalteleisten integrierte Kabelkanäle zur Aufnahme von Anschlusskabeln des/der Photovoltaikmodul/e (11, 12, 13, 14) aufweisen und/oder wobei die Glashalteleisten zumindest abschnittsweise als Stromschienen ausgebildet sind.

## Beschreibung

Die Erfindung betrifft eine Terrassenüberdachung mit einem aus mehreren Trägern gebildeten Rahmen, der eines oder mehrere Dachelemente aufnimmt, wobei die Terrassenüberdachung zumindest ein Photovoltaikmodul aufweist, wobei das/die Photovoltaikmodul/e von an Sparren angeordneten Glashalteleisten gehalten wird/werden.

Derartige Terrassenüberdachungen sind bekannt. Nachteilig bei bekannten Terrassenüberdachungen ist es, dass der Anschluss der Photovoltaikmodule und die Kabelführung entlang der Sparren problematisch und optisch nachteilig ist.

Die Aufgabe der Erfindung ist es, diese Nachteile der bekannten Terrassenüberdachungen zu überwinden und eine Terrassenüberdachung derart weiterzubilden, dass auf eine leichte und vorteilhafte Weise ein Anschluss der Photovoltaikmodule ermöglicht wird.

Diese Aufgabe wird erfindungsgemäß durch eine Terrassenüberdachung gemäß Anspruch 1 gelöst. Vorteilhafte Weiterbildungen der Erfindung sind in den Unteransprüchen angegeben.

Besonders vorteilhaft bei der Terrassenüberdachung mit einem aus mehreren Trägern gebildeten Rahmen, der eines oder mehrere Dachelemente aufnimmt, wobei die Terrassenüberdachung zumindest ein Photovoltaikmodul aufweist, wobei das/die Photovoltaikmodul/e von an Sparren angeordneten Glashalteleisten gehalten wird/werden, ist es, dass die Glashalteleisten integrierte Kabelkanäle zur Aufnahme von Anschlusskabeln des/der Photovoltaikmodul/e aufweisen und/oder wobei die Glashalteleisten zumindest abschnittsweise als Stromschienen ausgebildet sind.

Dadurch, dass die die Glashalteleisten integrierte Kabelkanäle zur Aufnahme von Anschlusskabeln des/der Photovoltaikmodul/e aufweisen und/oder dass die Glashalteleisten zumindest abschnittsweise als Stromschienen ausgebildet sind, ist ein Anschluss der Photovoltaikmodule auf eine besonders leichte und vorteilhafte Weise möglich, wobei ein insgesamt optisch besonders vorteilhafter Gesamteindruck geschaffen wird und keine optisch störenden Kabel oder zusätzliche an den Sparren angebrachte Kabelkanäle des Gesamteindruck stören.

Insbesondere können die Glashalteleisten als ein Stecksystem ausgebildet sein, sodass mehrere Glashalteleisten ineinandergesteckt werden können, um die gewünschte und benötigte Gesamtlänge der Glashalteleisten zu realisieren.

Sofern die Glashalteleisten zumindest abschnittsweise als Stromschienen ausgebildet sind, ist eine besonders einfache Installation der Photovoltaikmodule möglich. Die Photovoltaikmodule sind in diesem Fall an den Kanten mit entsprechenden elektrisch leitenden Anschlussbereichen versehen und werden bei der Montage in den Glashalteleisten automatisch über die als Stromschienen ausgebildeten Glashalteleisten elektrisch leitend angeschlossen.

Vorzugsweise weist die Terrassenüberdachung zumindest einen integrierten Wechselrichter auf, insbesondere kann ein Träger und/oder ein Pfosten der Terrassenüberdachung zumindest einen integrierten Wechselrichter aufweisen.

Durch die Integration zumindest eines Wechselrichters kann ein unmittelbarer Anschluss an ein Gebäudeenergienetz erfolgen und/oder eine Wechselspannungssteckdose und/oder ein Wechselspannungsverbraucher unmittelbar versorgt werden.

Vorzugsweise wird der Rahmen von mehreren Pfosten getragen, insbesondere können die Pfosten integrierte Kabelkanäle zur Aufnahme von Anschlusskabeln des/der Photovoltaikmodul/e und/oder zumindest eine Steckdose aufweisen, insbesondere zumindest eine Gleichspannungssteckdose mit einer Betriebsspannung von 12 V oder von 24 V und/oder zumindest eine Wechselspannungssteckdose mit einer Betriebsspannung von bis zu 230 V

Durch eine Integration einer oder mehrerer Gleichspannungssteckdosen und/oder Wechselspannungssteckdosen kann ein unmittelbarer Anschluss von Verbrauchern an der Terrassenüberdachung erfolgen, wie beispielsweise von Ladegeräten und/oder mobiler Mobilfunkendgeräten, Radios, Lampen und dergleichen.

Bevorzugt ist der Rahmen mittels eines Wandanschlussprofils an einer Gebäudewand befestigbar, wobei das Wandanschlussprofil zumindest einen integrierten Wechselrichter aufweist. Durch die Integration zumindest eines Wechselrichters in ein solches Wandanschlussprofil zur Befestigung der Terrassenüberdachung an einer Gebäudewand kann ein unmittelbarer Anschluss an ein Gebäudeenergienetz erfolgen und/oder eine Wechselspannungssteckdose und/oder ein Wechselspannungsverbraucher unmittelbar versorgt werden.

Vorzugsweise sind an dem Rahmen mehrere Dachelemente mit integrierten Photovoltaikmodulen oder mehrere Photovoltaikmodule in Glashalteleisten aufgenommen, wobei die Dachelemente einen Teil der Dachfläche oder die vollständige Dachfläche bilden.

In einer bevorzugten Ausführungsform weist die Terrassenüberdachung zumindest ein Seitenwandelement auf und das zumindest eine Seitenwandelement weist zumindest ein integriertes Photovoltaikmodul auf oder ist durch ein Photovoltaikmodul gebildet.

Dadurch, dass die Terrassenüberdachung zumindest ein Seitenwandelement aufweist, welches wiederum selbst ein integriertes Photovoltaikmodul aufweist oder durch ein integriertes Photovoltaikmodul gebildet ist, wird die für die Erzeugung von Strom mittels Photovoltaik nutzbare Fläche vergrößert und somit der Ertrag gesteigert.

Insbesondere kann die Terrassenüberdachung eines oder mehrere Seitenwandelemente an mehreren Seiten aufweisen, wobei die Seitenwandelemente jeweils zumindest ein Photovoltaikmodul aufweisen. Es können somit auch zu mehreren Seiten in die Seitenwandelemente integrierte Photovoltaikmodule angeordnet sein und die zur Stromerzeugung nutzbare Fläche weiter vergrößert werden.

Vorzugsweise sind mehrere Photovoltaikmodule auf der Dachfläche und/oder an Seitenwandelementen in Reihe geschaltet, insbesondere mit einer Spannung von bis zu 120 V. Eine maximale Spannung von 120 V ist vorteilhaft, da eine höhere Gleichspannung lebensgefährlich sein kann.

Vorzugsweise weist die Terrassenüberdachung zumindest einen Akkumulator auf, der von dem/den Photovoltaikmodul/e gespeist wird. Durch die Integration einer solchen Speichereinheit zur Speicherung elektrischer Energie wird die Nutzbarkeit der mittels der Photovoltaikmodule erzeugten elektrischen Energie verbessert, da die gespeicherte Energie in zeitlichem Abstand zu ihrer Erzeugung genutzt werden kann, beispielsweise um nach Sonnenuntergang eine Beleuchtung mit elektrischer Energie zu versorgen.

Bevorzugt sind einzelne oder mehrere Dachelemente durch Lamellen gebildet, die an dem Rahmen jeweils um eine Drehachse verschwenkbar gelagert sind, wobei die Lamellen von einer Schließstellung, in der die Lamellen eine geschlossene Dachfläche bilden, in eine insbesondere beliebige Öffnungsstellung verschwenkbar sind.

Insbesondere können die Lamellen einen Teil der Dachfläche oder die vollständige Dachfläche bilden. Insbesondere können die Lamellen Photovoltaikmodule aufweisen. Insbesondere kann ein Antrieb der Lamellen von einem in die Terrassenüberdachung integrierten Akkumulator gespeist werden, wobei der Akkumulator von den Photovoltaikmodulen geladen wird.

Sofern die Lamellen einen Teil der Dachfläche bilden und ferner Dachelemente mit integrierten Photovoltaikmodulen einen weiteren Teil der Dachfläche bilden, können verschiedene Vorteilhafte Eigenschaften kombiniert werden. So ist es durch die Anordnung einiger drehbarer Lamellen, die einen Teil der Dachfläche bilden, möglich, den Raum unterhalb der Terrassenüberdachung durch eine Öffnung der Lamellen schlagartig zu belüften und aufgeheizte Stauluft entweichen zu lassen. Hierdurch wird die Aufenthaltsqualität unter der Terrassenüberdachung gesteigert und es ist eine Belüftung möglich.

Bevorzugt ist an der Terrassenüberdachung zumindest ein elektrisch angetriebenes Sonnenschutzelement angeordnet, dessen elektrischer Antrieb von einem in die Terrassenüberdachung integrierten Akkumulator gespeist wird, wobei der Akkumulator von den Photovoltaikmodulen geladen wird. Durch eine solche Ausgestaltung wird der Antrieb eines elektrisch angetriebenen Sonnenschutzelementes ermöglicht, ohne dass die Terrassenüberdachung mit einem elektrisch angetriebenen Sonnenschutzelement zwingend an ein elektrisches Versorgungsnetz angeschlossen werden muss. Hierdurch kann der Installationsaufwand erheblich verringert werden.

Vorzugsweise weist die Terrassenüberdachung zumindest eine integrierte Steckdose zum Anschluss elektrischer Verbraucher auf, wobei die Steckdose von einem in die Terrassenüberdachung integrierten Akkumulator gespeist wird, wobei der Akkumulator von den Photovoltaikmodulen geladen wird, und/oder wobei die Steckdose unmittelbar von den Photovoltaikmodulen gespeist wird, insbesondere über zumindest einen in die Terrassenüberdachung integrierten Wechselrichter mit einer Wechselspannung von bis zu 230 V.

Bevorzugt weist die die Terrassenüberdachung zumindest einen elektrischen Verbraucher auf, der unmittelbar von den Photovoltaikmodulen gespeist wird und/oder der von zumindest einem in die Terrassenüberdachung integrierten Akkumulator gespeist wird, wobei der Akkumulator von den Photovoltaikmodulen geladen wird.

Insbesondere kann es sich dem elektrischen Verbraucher um einen oder mehrere in die Dachfläche integrierte Lüfter und/oder eine Klimatisierungseinheit zur Klimatisierung des Raumes unter der Terrassenüberdachung handeln. Durch die Anordnung von Lüftern und/oder einer Klimatisierungseinheit kann zum einen der Raum unterhalb der Terrassenüberdachung gekühlt und hierdurch die Aufenthaltsqualität gesteigert werden. Ein Nebeneffekt ist dabei die Kühlung der Photovoltaikmodule bei starker Sonneneinstrahlung, wodurch der Wirkungsgrad der Photovoltaikmodule durch die Kühlung gesteigert wird.

Besonders bevorzugt weist die Terrassenüberdachung zumindest eine Beleuchtungseinrichtung und/oder zumindest einen WLAN-Repeater auf, die/der unmittelbar von den Photovoltaikmodulen gespeist wird und/oder die/der von zumindest einem in die Terrassenüberdachung integrierten Akkumulator gespeist wird, wobei der Akkumulator von den Photovoltaikmodulen geladen wird. Durch die Anordnung einer oder mehrerer Beleuchtungseinrichtungen kann der Raum unter der Terrassenüberdachung beleuchtet werden. Bei einer Speisung dieser Beleuchtungseinrichtungen über einen integrierten Akkumulator, also einer Speichereinheit zur Speicherung elektrischer Energie, kann eine Beleuchtung zeitversetzt zur Erzeugung der elektrischen Energie beispielsweise nach Sonnenuntergang erfolgen.

Ein WLAN-Repeater dient der Erhöhung der Reichweite eines drahtlosen Funknetzes. Durch die Anordnung eines WLAN-Repeaters, der von zumindest einem in die Terrassenüberdachung integrierten Akkumulator gespeist wird, wobei der Akkumulator von den Photovoltaikmodulen geladen wird, ist eine Erweiterung eines lokalen Funknetzes auf den Bereich unterhalb sowie in der Nähe der Terrassenüberdachung möglich.

Mehrere Ausführungsbeispiele der Erfindung sind in den Figuren dargestellt und wird nachfolgend näher erläutert. Es zeigen:
- Fig. 1: Eine perspektivische Ansicht eines ersten Ausführungsbeispiels einer Terrassenüberdachung;
- Fig. 2: eine perspektivische Ansicht eines zweiten Ausführungsbeispiels einer Terrassenüberdachung;
- Fig. 3: eine perspektivische Ansicht eines dritten Ausführungsbeispiels einer Terrassenüberdachung;

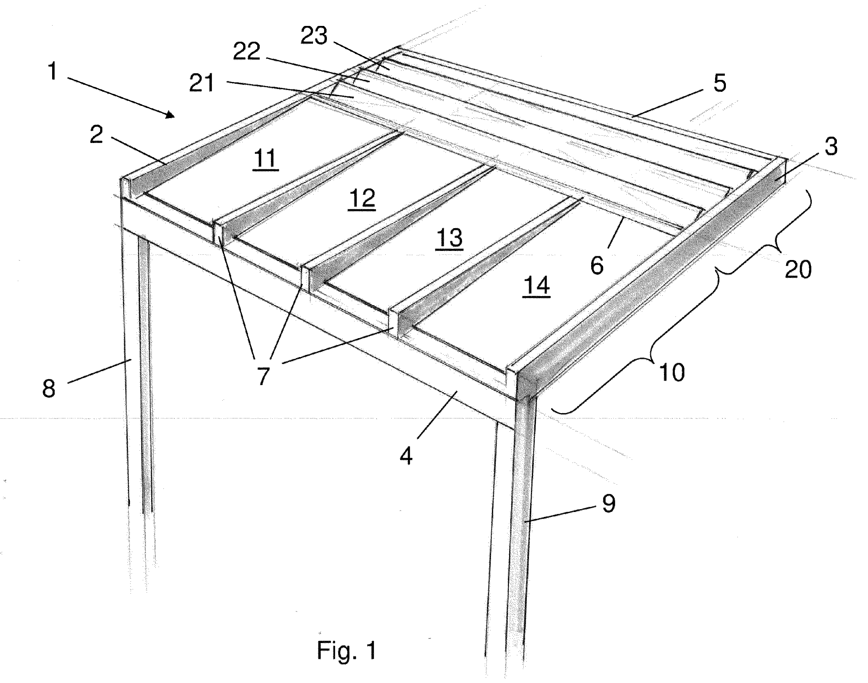

Fig. 1 zeigt eine perspektivische Ansicht eines ersten Ausführungsbeispiels einer Terrassenüberdachung 1. Die Dachfläche der Terrassenüberdachung 1 ist aufgeteilt in zwei Teile 10, 20, wobei der erste Teil 10 der Dachfläche durch feststehende Dachelemente mit Photovoltaikmodulen 11, 12, 13, 14 gebildet ist, die in Glashalteleisten an den Sparren der Terrassenüberdachung 1 gehalten sind.

Der zweite Teil 20 der Dachfläche der Terrassenüberdachung 10 ist gebildet durch drehbar gelagerte Lamellen 21, 22, 23.

Ferner weist die Terrassenüberdachung 1 einen Rahmen auf, der durch die Längsträger 2, 3 sowie den vorderen Querträger 4 und den hinteren Querträger 5 gebildet ist. Die Bezeichnungen vorne und hinten beziehen sich dabei auf die Darstellung gemäß Figur 1 und dienen nur der Erläuterung.

Zwischen den Längsträgern 2, 3 ist ferner ein mittlerer Querträger 6 angeordnet, welcher die beiden Dachflächenteile 10, 20 teilt. Von dem vorderen Querträger 4 und dem mittleren Querträger 6 werden die Sparren 7 getragen. Die Sparren 7 liegen auf dem vorderen Querträger 4 auf und werden des Weiteren an ihrem hinteren Ende von dem mittleren Querträger 6 getragen.

In dem durch die feststehenden Dachelemente mit den Photovoltaikmodulen 11, 12, 13, 14 gebildeten Teil 10 der Dachfläche weisen die Längsträger 2, 3 sowie die Sparren 7 Glashalteleisten auf, welche die feststehenden Dachelemente mit den Photovoltaikmodulen 11, 12, 13, 14 aufnehmen.

Die Glashalteleisten sind als Stromschienen ausgebildet und dienen somit neben der Befestigung der feststehenden Dachelemente mit den Photovoltaikmodulen 11, 12, 13, 14 gleichzeitig dem elektrischen Anschluss der Photovoltaikmodule 11, 12, 13, 14. Die Photovoltaikmodule 11, 12, 13, 14 sind dabei in Reihe geschaltet. Der mittels der Photovoltaikmodule 11, 12, 13, 14 erzeugte Gleichstrom wird über die als Stromschienen ausgebildeten Glashalteleisten zu einem in die Terrassenüberdachung 1 integrierten Akkumulator geleitet und der Akkumulator hierdurch automatisch geladen.

Die Längsträger 2, 3 und die Sparren 7 verlaufen horizontal. Die feststehenden Dachelemente mit den Photovoltaikmodulen 11, 12, 13, 14 sind gegenüber der Horizontalen geneigt, das heißt, dass diese ebenfalls eine Neigung gegenüber den horizontal verlaufenen Längsträgern 2, 3 und Sparren 7 aufweisen. Die Neigung der feststehenden Dachelemente mit den Photovoltaikmodulen 11, 12, 13, 14 dient der Abfuhr von auf die Terrassenüberdachung 1 auftreffendem Regenwasser in Richtung nach vorne zur Ableitung über den überbauten Raum hinweg und gleichzeitig der besseren Ausrichtung der Photovoltaikmodule 11, 12, 13, 14 zur Sonne hin.

Der vordere Querträger 4 wird getragen von vorderen Stützpfosten 8, 9. Der hintere Querträger 5 ist mittels eines Wandanschlussprofils an einer nicht dargestellten Gebäudewand befestigt.

In dem zweiten Teil 20 der Dachfläche, die durch bewegbare Lamellen 21, 22, 23 gebildet ist, sind die Lamellen 21, 22, 23 jeweils um eine Achse drehbar an den Längsträgern 2, 3 gelagert.

Die Lamellen 21, 22, 23 sind durch Aluminiumprofile mit einer rechteckigen Grundform gebildet. Jede Lamelle 21, 22, 23 ist um eine zur längeren Seite der rechteckigen Grundform parallele Drehachse drehbar an den Längsträgern 2, 3 gelagert. Die Lamellen 21, 22, 23 sind untereinander kinematisch gekoppelt und können mittels eines elektrischen Antriebes von einer Schließstellung in eine Öffnungsstellung verdreht werden. In der Schließstellung der Lamellen 21, 22, 23 bilden diese eine geschlossene Fläche in dem Teil 20 der Dachfläche der Terrassenüberdachung 1. In der Schließstellung der Lamellen 21, 22, 23 kann kein Regenwasser zwischen den Lamellen 21, 22, 23 hindurchtreten, sondern wird nach vorne zum dem Teil 10 der Dachfläche mit den feststehenden Dachelementen 11, 12, 13, 14 abgeleitet. Es liegen die Drehachsen der Lamellen 21, 22, 23 in einer gegenüber der Horizontalen geneigten Ebene, wodurch die Abfuhr des Regenwassers bewirkt wird, da die geschlossene Fläche bei den Lamellen 21, 22, 23 in ihrer Schließstellung somit ebenfalls geneigt ist.

Der elektrische Antrieb der Lamellen 21, 22, 23 wird von dem in die Terrassenüberdachung 1 integrierten Akkumulator mit elektrischer Energie versorgt, wobei der Akkumulator von den Photovoltaikmodulen 11, 12, 13, 14 geladen wird. Hierdurch ist ein Anschluss an ein elektrisches Versorgungsnetz entbehrlich.

In der perspektivischen Darstellung gemäß Fig. 1 sind die Lamellen 21, 22, 23 um einen Winkel aus der Schließstellung heraus in eine Öffnungsstellung verdreht, wie dies in Fig. 1 erkennbar ist. Die Lamellen 21, 22, 23 können noch weiter aus der Schließstellung heraus in die Öffnungsstellung verdreht werden, bis die Profile der Lamellen 21, 22, 23 maximal geöffnete Lüftungsschlitze bilden.

Durch ein Aufstellen der Lamellen 21, 22, 23 in die Öffnungsstellung kann der Raum unterhalb der Terrassenüberdachung 1 belüftet werden und angestaute durch Sonneneinstrahlung erhitzte Luft kann durch den geöffneten Teil 20 der Dachfläche entweichen. Hierdurch erfolgt aufgrund des entstehenden Luftsoges eine automatische Belüftung des Raumes unterhalb der Terrassenüberdachung, wodurch die Aufenthaltsqualität unterhalb der Terrassenüberdachung deutlich gesteigert wird.

In einer nicht dargestellten Alternative laufen die Sparren 7 vom vorderen Querträger 4 bis zum hinteren Querträger 5, wobei nur im vorderen Teil 10 des Daches feststehende Dachelemente mit Photovoltaikmodulen 11, 12, 13, 14 von den Sparren getragen werden und im hinteren Bereich 20 des Daches keine feststehenden Dachelemente angeordnet sind. Vielmehr sind im hinteren Bereich 20 des Daches die verstellbaren Lamellen 21, 22, 23 in einer Ebene oberhalb der Sparren 7 angeordnet und an den Längsträgern 2, 3 drehbar gelagert. In der Schließposition können die Lamellen 21, 22, 23 an den Sparren 7 und/oder den Längsträgern 2, 3 aufliegen, um beispielsweise Schneelasten zu tragen.

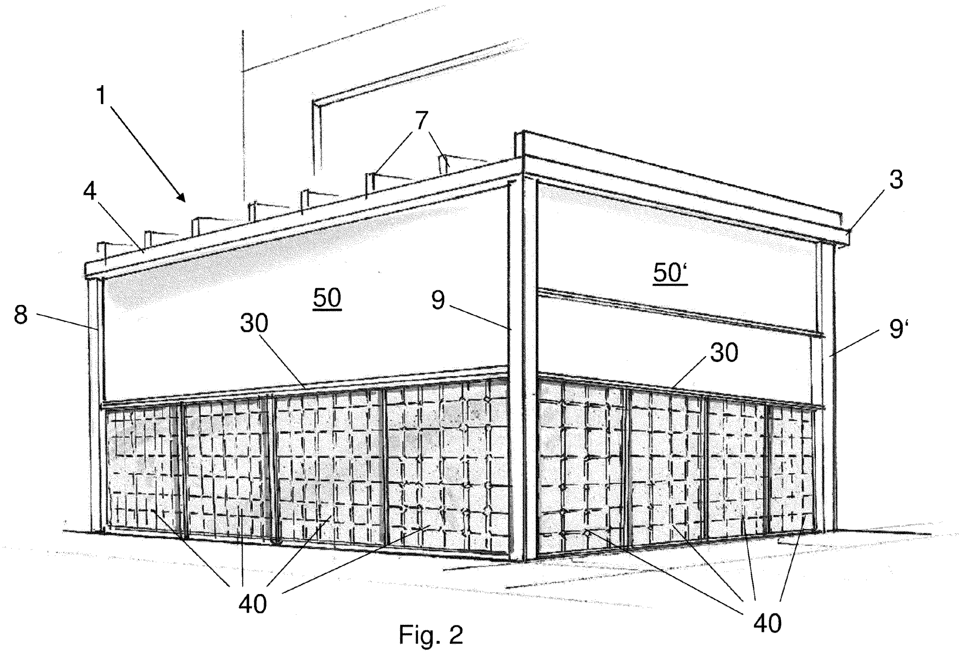

Fig. 2 zeigt eine perspektivische Ansicht eines zweiten Ausführungsbeispiels einer Terrassenüberdachung 1.

Die Terrassenüberdachung 1 weist einen Rahmen auf, der durch die Längsträger, von denen in dieser Perspektive nur der rechte Längsträger 3 sichtbar ist, sowie den vorderen Querträger 4 und einen hinteren Querträger gebildet ist. Die Bezeichnungen vorne und hinten beziehen sich dabei auf die Darstellung gemäß Figur 2 und dienen nur der Erläuterung.

Der Rahmen wird getragen von den senkrechten Pfosten 8, 9, 9`. Die Terrassenüberdachung 1 schließt sich rückseitig an ein im Hintergrund angedeutetes Gebäude an. Der vordere Querträger 4 wird getragen von vorderen Stützpfosten 8, 9. Der hintere Querträger wird von hinteren Pfosten 9` getragen und ist mittels eines Wandanschlussprofils an einer Gebäudewand befestigt.

Von dem vorderen Querträger 4 und dem hinteren Querträger, der in dieser Perspektive nicht sichtbar ist, werden die Sparren 7 getragen. Die Sparren 7 liegen auf dem vorderen Querträger 4 auf und werden des Weiteren an ihrem hinteren Ende von dem hinteren Querträger getragen.

Zwischen den senkrechten Pfosten 8, 9, 9' sind Seitenwandelemente 30 angeordnet, die eine umlaufende Brüstung bilden. Die Seitenwandelemente 30 weisen jeweils mehrere Photovoltaikmodule 40 auf. Die Photovoltaikmodule 40 sind mittels Glashalteleisten an den Seitenwandelementen 30 befestigt, wobei die Glashalteleisten als Stromschienen ausgebildet sind.

Die Glashalteleisten sind als Stromschienen ausgebildet und dienen somit neben der Befestigung der Photovoltaikmodule 40 gleichzeitig dem elektrischen Anschluss der Photovoltaikmodule 40. Die Photovoltaikmodule 40 sind dabei in Reihe geschaltet. Der mittels der Photovoltaikmodule 40 erzeugte Gleichstrom wird über die als Stromschienen ausgebildeten Glashalteleisten zu einem in die Terrassenüberdachung 1 integrierten Akkumulator geleitet und der Akkumulator hierdurch automatisch geladen.

Oberhalb der Seitenwandelemente 30 sind zwei Senkrechtbeschattungen 50 angeordnet, mit denen sich der Raum unterhalb der Terrassenüberdachung vor Wind und Sonne zusätzlich schützen lässt. Die an dem vorderen Querträger 4 angebrachte Senkrechtbeschattung 50 ist vollständig ausgefahren, während die am Längsträger 3 angebrachte Senkrechtbeschattung 50 nur teilweise ausgefahren ist.

Die Senkrechtbeschattungen 50 weisen ein nach unten ausfahrbares Ausfahrprofil auf, welches seitlich an senkrechten Führungen geführt wird.

Die Seitenwandelemente 30 sind als lastabtragende Bauteile der Terrassenüberdachung 1 ausgebildet und nehmen die statische und dynamische Last der Senkrechtbeschattungen 50 auf, d.h. insbesondere die dynamische Last bei auftreffenden Windlasten.

Der elektrische Antrieb der Senkrechtbeschattungen 50 wird von dem in die Terrassenüberdachung 1 integrierten Akkumulator mit elektrischer Energie versorgt. Hierdurch ist ein Anschluss an ein elektrisches Versorgungsnetz entbehrlich.

Ferner weist die Terrassenüberdachung 1 einen integrierten Wechselrichter auf, mittels dessen der von den Photovoltaikmodulen 40 erzeugte Gleichstrom in Wechselstrom gewandelt wird. Weiter ist an einem Pfosten 8, 9, 9' der Terrassenüberdachung 1 eine Steckdose angeordnet, die mit 230 V Wechselstrom zum Anschluss eines elektrischen Verbrauchers beaufschlagt ist und die direkt über die Photovoltaikmodule und/oder über einen in die Terrassenüberdachung 1 integrierten Akkumulator mit elektrischer Energie versorgt wird.

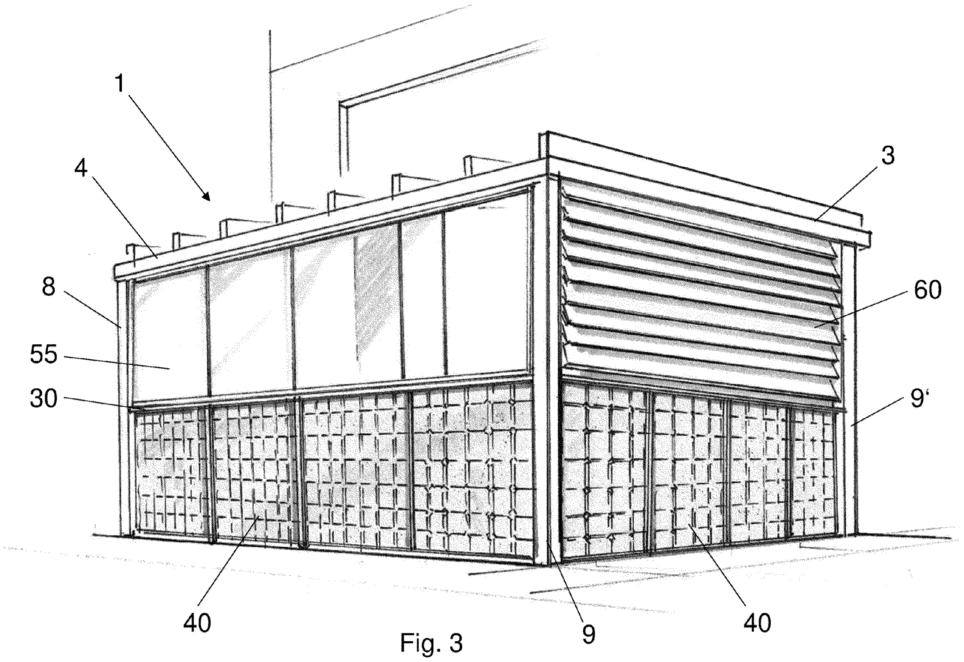

Fig. 3 zeigt eine perspektivische Ansicht eines dritten Ausführungsbeispiels einer Terrassenüberdachung 1.

Die Terrassenüberdachung 1 weist grundsätzlich denselben Aufbau auf, wie das zuvor erläuterte Ausführungsbeispiel.

Die Terrassenüberdachung 1 weist einen Rahmen auf, der durch die Längsträger, von denen in dieser Perspektive nur der rechte Längsträger 3 sichtbar ist, sowie den vorderen Querträger 4 und einen hinteren Querträger gebildet ist. Die Bezeichnungen vorne und hinten beziehen sich dabei auf die Darstellung gemäß Figur 3 und dienen nur der Erläuterung.

Der Rahmen wird getragen von den senkrechten Pfosten 8, 9, 9`. Die Terrassenüberdachung 1 schließt sich rückseitig an ein im Hintergrund angedeutetes Gebäude an. Der vordere Querträger 4 wird getragen von vorderen Stützpfosten 8, 9. Der hintere Querträger wird von hinteren Pfosten 9` getragen und ist mittels eines Wandanschlussprofils an einer Gebäudewand befestigt.

Von dem vorderen Querträger 4 und dem hinteren Querträger, der in dieser Perspektive nicht sichtbar ist, werden die Sparren 7 getragen. Die Sparren 7 liegen auf dem vorderen Querträger 4 auf und werden des Weiteren an ihrem hinteren Ende von dem hinteren Querträger getragen.

Zwischen den senkrechten Pfosten 8, 9, 9' sind Seitenwandelemente 30 angeordnet, die eine umlaufende Brüstung bilden. Die Seitenwandelemente 30 weisen jeweils mehrere Photovoltaikmodule 40 auf. Die Photovoltaikmodule 40 sind mittels Glashalteleisten an den Seitenwandelementen 30 befestigt, wobei die Glashalteleisten als Stromschienen ausgebildet sind.

Die Glashalteleisten sind als Stromschienen ausgebildet und dienen somit neben der Befestigung der Photovoltaikmodule 40 gleichzeitig dem elektrischen Anschluss der Photovoltaikmodule 40. Die Photovoltaikmodule 40 sind dabei in Reihe geschaltet. Der mittels der Photovoltaikmodule 40 erzeugte Gleichstrom wird über die als Stromschienen ausgebildeten Glashalteleisten zu einem in die Terrassenüberdachung 1 integrierten Akkumulator geleitet und der Akkumulator hierdurch automatisch geladen.

Oberhalb des vorderen Seitenwandelementes 30 sind verschiebbare Glaselemente 55 angeordnet, mit denen sich der Raum unterhalb der Terrassenüberdachung vor Wind und Regen zusätzlich schützen lässt. Die statische und dynamische Last der Glaselemente 55 wird von dem Seitenwandelement 30 aufgenommen und abgetragen, d.h. sowohl die statische Last aufgrund des Eigengewischtes der Glaselemente 55, als auch die dynamische Last bei auftretenden Windlasten.

Oberhalb des rechten Seitenwandelementes 30 ist eine Vertikallamellenanlage 60 angeordnet, mit der sich der Raum unterhalb der Terrassenüberdachung vor Sonne, Wind und Regen zusätzlich schützen lässt. Die statische und dynamische Last der Vertikallamellenanlage 60 wird von dem Seitenwandelement 30 aufgenommen und abgetragen, d.h. sowohl die statische Last aufgrund des Eigengewischtes der Vertikallamellenanlage 60, als auch die dynamische Last bei auftretenden Windlasten.

Der elektrische Antrieb der Vertikallamellenanlage 60 wird von dem in die Terrassenüberdachung 1 integrierten Akkumulator mit elektrischer Energie versorgt. Hierdurch ist ein Anschluss an ein elektrisches Versorgungsnetz entbehrlich.

Durch ein Verstellen der Lamellen der Vertikallamellenanlage 60 kann der Raum unterhalb der Terrassenüberdachung 1 belüftet werden.

Ferner weist die Terrassenüberdachung 1 einen integrierten Wechselrichter auf, mittels dessen der von den Photovoltaikmodulen 40 erzeugte Gleichstrom in Wechselstrom gewandelt wird. Weiter ist an einem Pfosten 8, 9, 9' der Terrassenüberdachung 1 eine Steckdose angeordnet, die mit 230 V Wechselstrom zum Anschluss eines elektrischen Verbrauchers beaufschlagt ist und die direkt über die Photovoltaikmodule und/oder über einen in die Terrassenüberdachung 1 integrierten Akkumulator mit elektrischer Energie versorgt wird.

Die Seitenwandelemente 30 sind somit als lastabtragende Bauteile der Terrassenüberdachung 1 ausgebildet und nehmen die statische und dynamische Last der Bauelemente 55, 60 auf, die oberhalb der Seitenwandelemente 30 montiert sind, d.h. insbesondere die dynamische Last bei auftreffenden Windlasten. Dabei bilden die Seitenwandelemente 30 eine umlaufende Brüstung.

## Patentansprüche

1. Terrassenüberdachung (1) mit einem aus mehreren Trägern (2, 3, 4, 5) gebildeten Rahmen, der eines oder mehrere Dachelemente aufnimmt, wobei die Terrassenüberdachung (1) zumindest ein Photovoltaikmodul (11, 12, 13, 14) aufweist, wobei das/die Photovoltaikmodul/e (11, 12, 13, 14) von an Sparren (7) angeordneten Glashalteleisten gehalten wird/werden, **dadurch gekennzeichnet, dass** die Glashalteleisten integrierte Kabelkanäle zur Aufnahme von Anschlusskabeln des/der Photovoltaikmodul/e (11, 12, 13, 14) aufweisen und/oder wobei die Glashalteleisten zumindest abschnittsweise als Stromschienen ausgebildet sind.

2. Terrassenüberdachung (1) nach Anspruch 1, **dadurch gekennzeichnet, dass** die Terrassenüberdachung (1) zumindest einen integrierten Wechselrichter aufweist, insbesondere dass ein Träger und/oder ein Pfosten der Terrassenüberdachung zumindest einen integrierten Wechselrichter aufweist.

3. Terrassenüberdachung (1) nach Anspruch 1 oder 2, **dadurch gekennzeichnet, dass** der Rahmen von mehreren Pfosten (8, 9, 9`) getragen wird, insbesondere dass die Pfosten (8, 9, 9`) integrierte Kabelkanäle zur Aufnahme von Anschlusskabeln des/der Photovoltaikmodul/e (11, 12, 13, 14) und/oder zumindest eine Steckdose aufweisen, insbesondere zumindest eine Gleichspannungssteckdose mit einer Betriebsspannung von 12 V oder von 24 V und/oder zumindest eine Wechselspannungssteckdose mit einer Betriebsspannung von bis zu 230 V.

4. Terrassenüberdachung (1) nach einem der vorherigen Ansprüche, **dadurch gekennzeichnet, dass** der Rahmen mittels eines Wandanschlussprofils an einer Gebäudewand befestigbar ist, wobei das Wandanschlussprofil zumindest einen integrierten Wechselrichter aufweist.

5. Terrassenüberdachung (1) nach einem der vorherigen Ansprüche, **dadurch gekennzeichnet, dass** an dem Rahmen mehrere Dachelemente mit integrierten Photovoltaikmodulen (11, 12, 13, 14) oder mehrere Photovoltaikmodule (11, 12, 13, 14) in Glashalteleisten aufgenommen sind, wobei die Dachelemente einen Teil der Dachfläche oder die vollständige Dachfläche bilden.

6. Terrassenüberdachung (1) nach einem der vorherigen Ansprüche, **dadurch gekennzeichnet, dass** die Terrassenüberdachung (1) zumindest ein Seitenwandelement (30) aufweist und das zumindest eine Seitenwandelement (30) zumindest ein integriertes Photovoltaikmodul (40) aufweist oder durch ein Photovoltaikmodul (40) gebildet ist.

7. Terrassenüberdachung (1) nach einem der vorherigen Ansprüche, **dadurch gekennzeichnet, dass** die Terrassenüberdachung (1) eines oder mehrere Seitenwandelemente (30) an mehreren Seiten aufweist, wobei die Seitenwandelemente (30) jeweils zumindest ein Photovoltaikmodul (40) aufweisen.

8. Terrassenüberdachung (1) nach einem der vorherigen Ansprüche, **dadurch gekennzeichnet, dass** mehrere Photovoltaikmodule (11, 12, 13, 14, 40) auf der Dachfläche und/oder an Seitenwandelementen in Reihe geschaltet sind, insbesondere mit einer Spannung von bis zu 120 V.

9. Terrassenüberdachung (1) nach einem der vorherigen Ansprüche, **dadurch gekennzeichnet, dass** die Terrassenüberdachung (1) zumindest einen Akkumulator aufweist, der von den Photovoltaikmodulen (11, 12, 13, 14, 40) gespeist wird.

10. Terrassenüberdachung (1) nach einem der vorherigen Ansprüche, **dadurch gekennzeichnet, dass** einzelne oder mehrere Dachelemente durch Lamellen (21, 22, 23) gebildet sind, die an dem Rahmen jeweils um eine Drehachse verschwenkbar gelagert sind, wobei die Lamellen (21, 22, 23) von einer Schließstellung, in der die Lamellen (21, 22, 23) eine geschlossene Dachfläche bilden, in eine insbesondere beliebige Öffnungsstellung verschwenkbar sind, insbesondere dass die Lamellen (21, 22, 23) einen Teil der Dachfläche oder die vollständige Dachfläche bilden, insbesondere dass die Lamellen (21, 22, 23) Photovoltaikmodule aufweisen, insbesondere dass ein Antrieb der Lamellen (21, 22, 23) von einem in die Terrassenüberdachung (1) integrierten Akkumulator gespeist wird, wobei der Akkumulator von den Photovoltaikmodulen (11, 12, 13, 14, 40) geladen wird.

11. Terrassenüberdachung (1) nach einem der vorherigen Ansprüche, **dadurch gekennzeichnet, dass** an der Terrassenüberdachung (1) zumindest ein elektrisch angetriebenes Sonnenschutzelement (50, 60) angeordnet ist, dessen elektrischer Antrieb von einem in die Terrassenüberdachung (1) integrierten Akkumulator gespeist wird, wobei der Akkumulator von den Photovoltaikmodulen (11, 12, 13, 14, 40) geladen wird.

12. Terrassenüberdachung (1) nach einem der vorherigen Ansprüche, **dadurch gekennzeichnet, dass** die Terrassenüberdachung (1) zumindest eine integrierte Steckdose zum Anschluss elektrischer Verbraucher aufweist, wobei die Steckdose von einem in die Terrassenüberdachung (1) integrierten Akkumulator gespeist wird, wobei der Akkumulator von den Photovoltaikmodulen (11, 12, 13, 14, 40) geladen wird, und/oder wobei die Steckdose unmittelbar von den Photovoltaikmodulen (11, 12, 13, 14, 40) gespeist wird, insbesondere über zumindest einen in die Terrassenüberdachung (1) integrierten Wechselrichter mit einer Wechselspannung von bis zu 230 V.

13. Terrassenüberdachung (1) nach einem der vorherigen Ansprüche, **dadurch gekennzeichnet, dass** die Terrassenüberdachung (1) zumindest einen elektrischen Verbraucher aufweist, der unmittelbar von den Photovoltaikmodulen (11, 12, 13, 14, 40) gespeist wird und/oder der von zumindest einem in die Terrassenüberdachung (1) integrierten Akkumulator gespeist wird, wobei der Akkumulator von den Photovoltaikmodulen (11, 12, 13, 14, 40) geladen wird.

14. Terrassenüberdachung (1) nach Anspruch 13, **dadurch gekennzeichnet, dass** es sich bei dem elektrischen Verbraucher um einen oder mehrere in die Dachfläche integrierte Lüfter und/oder eine Klimatisierungseinheit zur Klimatisierung des Raumes unter der Terrassenüberdachung (1) handelt.

15. Terrassenüberdachung (1) nach einem der vorherigen Ansprüche, **dadurch gekennzeichnet, dass** die Terrassenüberdachung (1) zumindest eine Beleuchtungseinrichtung und/oder zumindest einen WLAN-Repeater aufweist, die/der unmittelbar von den Photovoltaikmodulen (11, 12, 13, 14, 40) gespeist wird und/oder die/der von zumindest einem in die Terrassenüberdachung (1) integrierten Akkumulator gespeist wird, wobei der Akkumulator von den Photovoltaikmodulen (11, 12, 13, 14, 40) geladen wird.
